# EUROPEAN PATENT APPLICATION

(11) **EP 1 319 948 A2**
(43) Date of publication of application: **18.06.2003**
(21) Application number: 02258306.6
(22) Date of filing: 02.12.2002
(51) Int. Cl.: G01N 30/60

(54) **Nano-fabricated chromatography column**

(30) Priority: 12.12.2001 US 21167
(71) Applicant: Dong, Jim, Tucson, Arizona 85719 (US)
(72) Inventor: Dong, Jim, Tucson, Arizona 85719 (US)
(74) Representative: Jehan, Robert

(57) **Abstract**

A miniature gas chromatography column (10) is provided that is equipped with an on-column thermoelectric temperature control (60) and which is fabricated using a chemical procedure to bond the stationary phase (22) to the interior walls of a capillary column. The fabrication of the column is begun by size-matching a pair of substrates (12) and then etching nanometer-scale groves (16) on to one of the substrates using a photolithography. That is followed by the application and bonding of the stationary phase into the grooves which typically involves the impregnation and reaction with a solution of the stationary phase and evaporation of a solvent. The coated channels are then closed to form the finished capillary column. Compared with existing GC columns, the device with its nano-fabricated column with temperature control has the distinct advantages of being miniature in size, low in power, and light in its overall weight, all of which provide significant advantages.

## Description

The present invention relates to an improvement in the methods used to create gas chromatography columns used in the scientific analysis of complex organic compounds; more specifically, to a method of creating a nano-scale or micro-scale chromatography column that is highly compact and therefore portable and which can be easily used in the field because of these characteristics.

Chromatography is a method used by the scientific community which is defined as a separation in which the subject material is applied as a narrow inlet zone to a stationary porous sorbant and its constituent flow of a mobile phase which can either be a liquid or a gas. Chromatography has also been described as a method by which the components of a mixture are separated on an absorbent column in a flowing system. A still further definition of chromatography describes it as the separation process that is achieved by distributing a sample between a mobile phase and a stationary phase. Those present substances that are distributed preferentially in the moving phase pass through the system faster than those that are distributed preferentially in the stationary phase.

In recent years the science of gas chromatography has advanced dramatically and it is now an invaluable research and analytical tool in almost all branches of analytical and biochemical science. In the gas chromatography process, the carrier gas serves as the mobile phase that elutes (to remove by the use of a solvent) the components of a mixture from a column containing a stationary phase. Gas chromatography occurs because of the difference in the positions of absorption equilibrium between the gaseous compounds of the sample and the stationary phase.

In the gas chromatography process, in contrast to other types of chromatography, the gas, or mobile phase, does not interact with the molecules of the analytes. This characteristic is due in large part to the fact that the carrier gas is usually an inert gas such a helium, argon, or nitrogen. Additionally, the stationary phase is a solid with a large surface area which enhances the rate at which the analytes are absorbed within the stationary phase.

Chromatographic columns are the heart of a number of well-developed analytical systems such as gas chromatography (GC), high performance liquid chromatography (HPLC), and capillary electrophoresis (CEP). Most current chromatographic columns, particularly GC columns, are glass or fused silica tubes coated with a stationary phase which is generally a sticky liquid polymer on the inner wall. The stationary phase causes the separation of the components or analytes in the sample by mechanisms of absorption and partition of the analytes between the gas and the liquid phases.

Different capillary columns are commercially available with column sizes varying from 50 to 1000µ and lengths from 5m for fast/portable GCs to 100 m for bench-top models. A variety of different stationary phases are also available, including ammonia, molecular sieve, and the most commonly encountered silicon based polymer. The standard stationary film thickness is around 1µ, however, thicker films are needed to separate low boiling point compounds and to operate at high sample temperatures.

Historically, theoretical work on gas chromatography was first established by K Peters and K Weil (K Peter and K Weil, Z. Angew. Chem., 43, 608, 1930). In 1941, Hesse *et al* applied a gas flow through a packed column to accomplish the analysis of different compounds which marked the first demonstration of gas chromatography (G Hesse, H Eilbrecht and F Reicheneder, Annalen , 546, 251, 1041). Capillary GC were purposed and analysed by Golay long before its existence (MJE Golay, in HA Szymanski ed., Lectures on Gas Chromatography - 1962, Chapter 1, p. 1, Plenum Press, New York, 1963), and it was not until the early 1970's that it was first commercialised by Hewlett-Packard.

Capillary columns are most frequently used in CG and a large number of stationary phases for this use have been patented.

The first of the relevant prior art is put forth in US Patent no. 4,240,472 in which Srivas R Srinivas disclosed in detail a system for coating a capillary column for chromatography purposes. The system consists of a serial of vessels with temperature, atmosphere, and pressure control to carry out the reaction between the support and stationary phase, to evaporate the solvent, and to cure the stationary phase. The system also provided a number accessories to clean the capillaries and to upload and discharge the stationary phase. Additionally, a means is provided to change its physical variables including reaction time, temperature, gas flow rate, and atmosphere. Still further, a means for coating the particulate stationary phase support and capillary tubes, a means to drain excess liquid from the support, means to dry the coated liquid, a means to condition the stationary phase, and a means to transfer the stationary phase into a column are all also provided by this example of the prior art. This example of the prior art will be of reference value to the present invention in terms of the reaction conditions for the different stationary phases.

While in US Patent no. 4,276,061, Terry J Nesttrick *et al* disclosed a multi-step process to form carefully controlled polysiloxane and its derivatives on the support. It consists of relatively more cycles of successive reacting chloro-substituted polysiloxane molecules with the activated silanol groups on the support. The process was finally capped by reacting with the monochlorosolane. The multiple reaction steps, according to the inventors, allowed accurate control of the thickness of the stationary phase.
As another improvement to the ordinary siloxane film, Jerald S Bradshaw disclosed a method in US Patent no. 4,996,277 to prepare the oligoethylene oxide-containing alkenes, alkoxysilanes and polysiloxanes. In the invention, oligoethylene oxide-substituted aryl and aralkyl alkoxy silanes and polysiloxane polymers containing oligoethylene oxide-substituted aryl and aralkyl side-chains are prepared. The products are claimed as useful in both the chromatography stationary phase as well as in the super-critical fluid chromatography for the separation of various closely related chemical substances such as homologues and isomers. The oligoethylene oxide-substituted aryl and aralkyl alkoxy silanes are also reactive towards silica particles for use as packing in liquid chromatography columns.

Moreover, in US Patent no. 4,966,785, Stephen R Springston has disclosed a method for making extremely stable non-extractable polymeric stationary phase within a capillary column by exposing the monomers and low molecular weight polymer to a low-temperature plasma that has an average energy between 1-10 electron volt, and electron densities under 10(to the twelve power) per cubic centimetre. As opposed to the high temperature or catalysed polymerisation, the radicals in that plasma cause cross-linking in the precursor. The stationary phase, thus prepared, is, according to the inventors, to have less bleeding at higher temperatures.

Additionally, JK Sandoval has found stable, covalently bonded substrates made through a hydride intermediate (US Patent no. 5,017,540 and US Patent no. 5,326,738). It was also disclosed that these hydrides were preferably further derivatized by the catalytic addition of organic compounds bearing such terminals as the vinyl group. This stationary phase is shown to have superior efficiency for low boiling point alkenes. Other special stationary phases have also been prepared to address such problems as the separation of chiral substances. Thus, Daniel Armstrong patented an ether derivative of cyclodextrin, such as permethylated hydroxy ether of cyclodextrin in fused silica capillaries to separate chiral compounds (US Patent no. 5,154,738). A large number of compounds have been claimed in this invention.

Most recently, Ulf Menyes *et al* patented (US Patent no. 6,136,438) a method to modify the stationary phase that contains silanol groups with calixarene for gas chromatography. The silanol in the stationary phase was first reacted with the dialkylsilane so that a maximum number of the silanol groups were modified, and then the linkage was formed by heterogeneous hydrosilylation between an olefinic group, which is in the calixarene and the silane functionality of the stationary phase in the presence of a noble metal catalyst. This modification was believed to improve the performance of existing stationary phases in terms of both efficiency and stability.

Inorganic materials have also been incorporated into the stationary phase. Thus, in US Patent no. 5,637,135, Daniel M Ottenstein has patented an organic-inorganic sol-gels produced by the hydrolysis and condensation of alkoxysilances that contain hydrolyzable alkoxy groups and non-hydrolyzable organo groups. The organic groups provide chromatographic activity in the resulting hybrid organic-inorganic material. It was claimed that hydrocarbon mixtures be advantageously analysed by such hybrid materials.

As another special method, US Patent no. 5,719,322 by James R Lansbarks, disclosed the bonding of molecular sieve particles to the silica capillary wall in the absence of any organic binder to separate small inorganic molecules. The totally inorganic nature of the stationary phase allows the use of non-traditional carriers such as air and higher operation temperatures.

The common problem shared by all of the forgoing prior art is that each requires a construction method that results in a large chromatography column. While this size does not result in any problems with the analytical product of its use, it does add a significant degree of weight and cost to the equipment. The cost and size of the prior art have the effect of both limiting the number of potential users due to cost considerations and the places where such equipment can be used due to its size and weight considerations.

The present invention seeks to provide an improved chromatography column.

According to an aspect of the present invention, there is provided a nano-fabricated chromatography column as specified in claim 1.

According to another aspect of the present invention, there is provided a chromatography column as specified in claim 4.

The preferred embodiment are able to provide a method of producing a small and compact gas chromatography column that can be used with the large variety of analytical equipment available today. The resulting chromatography instrument allows a larger number of users access to its designed benefits in a larger number of locations. The result of these benefits to the scientific community can provide a larger and more accurate data base from which to draw in the pursuit of a wide spectrum scientific discovery and research.

The preferred embodiments can also provide a method by which a capillary column can be constructed for use with modern gas chromatography equipment for the analysis of complex organic compounds. They can also provide such a method of producing a capillary column which employs nano-technology to produce such a column that is extraordinarily compact in its overall size.

According to the preferred embodiment, there is provided a compact capillary column that can be used in small analytical equipment that is commonly used in smaller laboratories and in the field and other similar remote locations.

The preferred method of constructing a capillary column can produce an effective apparatus at a low enough cost that allows for its use by a larger number of organisations and scientists than was previously possible.

Advantageously, there is provided a miniature chromatography column for use with a large majority of the gas chromatography equipment on the market today. More specifically, by the use of such a miniature gas chromatography column that is equipped with an on-column temperature control and which is fabricated using a chemical procedure to bond the stationary phase to the interior walls of the capillary column providing the basis upon which the remaining components of the system are built.

The preferred procedure for the fabrication of the system is begun by size matching a pair of substrates that will end up being the substrate and cover that form the body of the invention. After the two pieces are size-matched, they are then cleaned and micrometer or nanometer-scale groves are etched on to the upper surface of the substrate using photolithography or e-beam lithography. That is followed by the application and bonding of the stationary phase into the grooves which typically involves the impregnation and reaction with a solution of the stationary phase and evaporation of the solvent. The coated channels are then closed by the attachment of the cover to form the finished capillary column.

Finally, thermoelectric coolers and resistor heaters are attached to the capillary column and the connection ends are polished to complete its construction process. A heat sink compound may be used to facilitate the transfer of heat between the thermoelectric coolers and resistor heaters to and from the substrate. Compared with existing GC column-ovens, the preferred system with its nano-fabricated column with temperature control has the distinct advantages of being miniature in size, low in power, and light in its overall weight, all of which provide significant advantages over the prior art.

Embodiments of the present invention are described below, by way of example only, with reference to the accompanying drawings, in which:
FIG. 1 is a flow chart diagramming the typical procedure used to fabricate the micro or nano-structured column system which involves substrate preparation, photolithography, bonding and cross-linking of the stationary phase, covering up the channels, and attaching thermoelectric coolers and/or heaters.
FIG. 2 is a side elevation exploded view of the surface of the template of the nano-column detailing the configuration of the initial stage of the fabrication of the present invention in which the prepared substrate is ready for the addition of the other components of the system.
FIG. 3 is a side elevation view of the prepared substrate component of the system immediately after the layer of photoresist has been rolled onto its upper surface and prior to its being exposed in the photolithography procedure, or other similar process, used in the nano-fabrication of the system.
FIG. 4 is a side elevation view of the prepared substrate component of the system which illustrates the configuration of the photoresist directly after the photolithography procedure but prior to the etching of the underlying substrate.
FIG. 5 is a side elevation view of the prepared substrate component of the system illustrating the general configuration of the substrate after the etching process has taken place which imparts the nano-grooves into the surface of the substrate.
FIG. 6 is a side elevation view of the prepared substrate component of the system after the nano-grooves have been etched into the substrate and also after the remaining photoresist has been lifted off by back-side exposure and development.
FIG. 7 is a side elevation view of the prepared substrate component of the system illustrating the manner in which a liquid solution containing the desired stationary phase is applied into the cavities of the plurality of nano-grooves that make up the system.
FIG. 8 is a side elevation view of the prepared substrate component of the present invention illustrating the manner in which the removal of the liquid solution of above deposits an even layer of the correct thickness of the stationary phase on the surfaces of the nano-grooves.
FIG. 9 is a side elevation view of the prepared substrate component of the system illustrating the manner in which a thin layer of high temperature binder is applied to the upper surface of the substrate between the plurality of the nano-grooves.
FIG. 10 is a side elevation view of the prepared substrate component of the system illustrating the manner in which the cover piece is placed over the substrate and glued there in place to close off the upper ends of the nano-grooves and form the completed nano-fabricated capillary column to be used in a gas chromatography analysis.
FIG. 11 is a perspective view of an embodiment of the system in which the nano-fabricated capillary column is constructed with the use of a single relatively large channel which is beneficial in the analysis of large samples of low concentrations.
FIG. 12 is a perspective view of an embodiment of the system in which the nano-fabricated capillary column is constructed with the use of a larger number of small parallel channels which provides faster separation times at a higher degree of efficiency than the previous embodiment of the invention.
FIG. 13 is a perspective view of an embodiment of the system in which the nano-fabricated capillary column is constructed with the use of combination of the previous two embodiments which results in a balance between capacity and efficiency.
FIG. 14 is a perspective view of a completed nano-fabricated gas chromatography which makes use of a TEFLON® washer for sealing the connections with the injector and detector and which also illustrates the manner in which the substrates and washers are stamped together by an aluminium casing.
FIG. 15 is a perspective elevation view of the system illustrating the manner of construction of a thermocouple employed to monitor the operating temperature of the invention and the method used to attach it to the body of the system.
FIG. 16 is a side elevation cut-away view of the body of the system illustrating the location of the thermocouple device in relation to the other major components of the system.

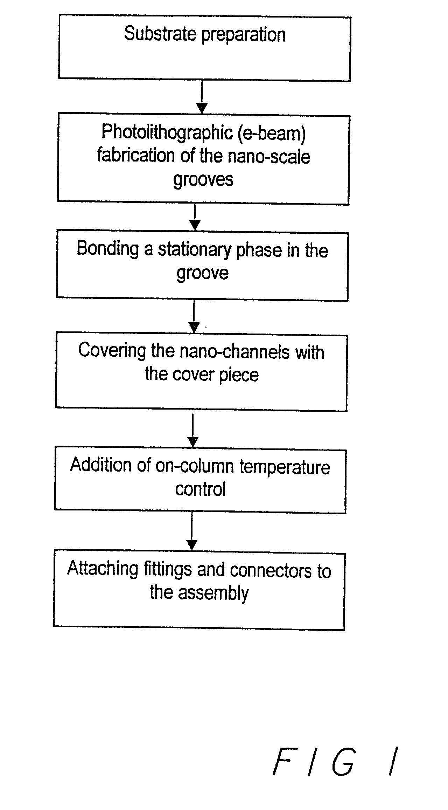

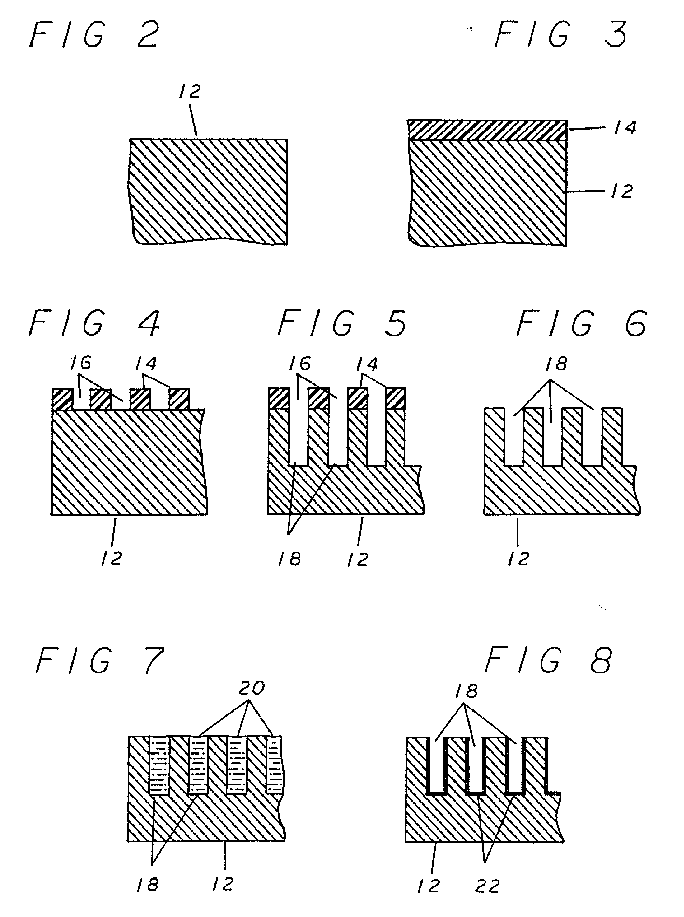

Referring now to the drawings, and more specifically to FIG. 1, a representational flow chart is provided which illustrates the major steps in the fabrication of the nano-fabricated chromatography column assembly 10. The fabrication begins with a pair of sized-matched substrates 12 (further detailed in FIG. 2) which can be composed of a variety of materials, but preferably they generally consist of silica, glass, silicon, metal oxides, stainless steel, and/or copper. The preference for these materials is based primarily on their work-ability as is well established in the field.

The two pieces of substrate 12 have been polished so that a gas-tight seal can be formed when stacked together and placed under moderate amount of pressure. Additionally, the substrates 12 are cleaned thoroughly in acidic solvents and dried prior to the commencement of the nano-fabrication process which produces the preferred device.

In the second step in the fabrication of the present invention, the micro or nano-scale grooves 18 are constructed using nano-technology (a process that is further detailed in FIGS. 3, 4, 5, and 6). More specifically, the nano-scale grooves 18 are created through either the photolithography process or by e-beam writing. Of the two possible choices, photolithography is the more preferable because of its relatively low cost and its large existing technological base.

The process is begun by roller coating approximately 2µ film of photoresist 14 onto the upper surface of the substrate 12. This film of photoresist 14 is either a positively or negatively charged depending upon the specific process to be used in the developing process. The film of photoresist 14 is then pre-baked and baked to evaporate the solvent and to solidify it on the surface of the substrate 12 and prepare it to accept the desired pattern for the completed capillary column.

The desired pattern in the reticle is then transferred to the photoresist 14 film on a photolithographic stepper using the g-line of a mercury arch lamp. The subsequent development of the photoresist 14 can be accomplished by either a wet or dry process depending on its nature. The development of the photoresist 14 forms the desired pattern within the body of the photoresist 14 by leaving a series of exposed photoresist grooves 16 but leaves the surface of the substrate 12 intact. This pattern in the photoresist 14 is then transferred to the substrate 12 by the etching process which removes a specific amount of the substrate 12 that is not protected by the remaining photoresist 14 and leaves the specified pattern of nano-scale grooves 18. The etching process is conducted in a different media which is dictated by the chemical nature of the photoresist 14 and substrate 12. Wet etching in a 50% methyl-ethyl ether-5.9% aqueous KOH solution was found to be desirable for silica. Finally, the residual photoresist 14 is lifted off of the upper surface of the substrate 12 by back-side exposure and development leaving the upper surface of the substrate and the nano-scale grooves 18 free of any foreign matter.

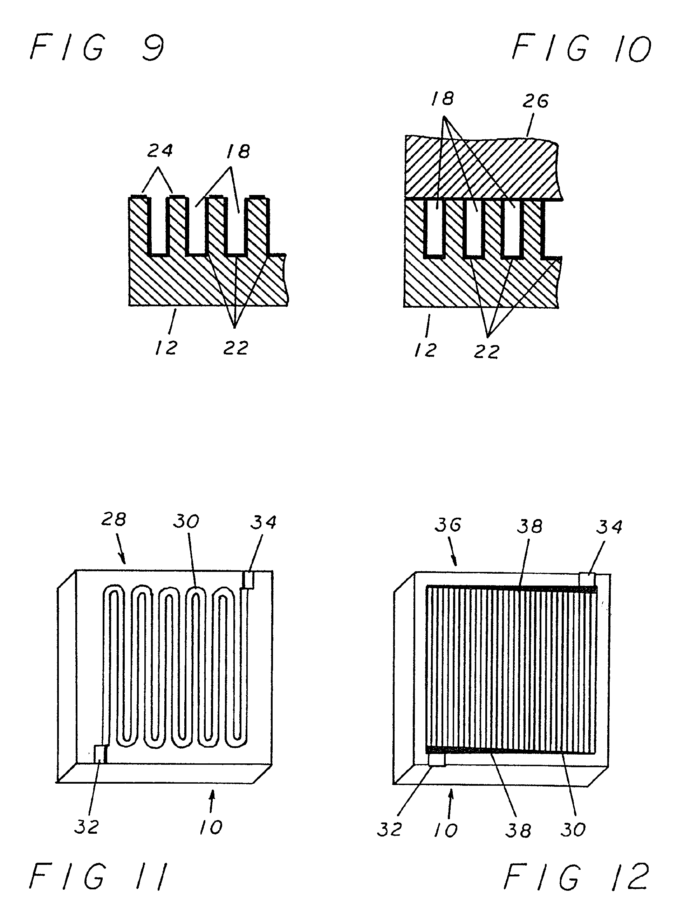

In the third step of the fabrication process (detailed in FIGS. 7 and 8), the substrate 12 containing the nano-scale grooves 18 is dipped into a 2% organic stationary phase solution 20. The polymer forming the stationary phase 22 is thus reacted with the substrate 12 to form chemical bonds and to cross-link to a higher degree of polymerisation. Different terminal groups can be attached in this step to modify the polarity of the stationary phase 22, including the phenyl group (-C₆H₅) and trifluoropropyl (-C₃H₄F₃). The open nano-scale grooves 18 in the substrate 12 allow easy access for the introduction of the stationary phase solution 20. This in turn allows for faster reactions during such procedures, including the polymerisation of such species as organic peroxide (a free radical generator), UV light, plasma, oxygen, and water vapour, which in turn allow for the attachment of a variety of stationary phases 22.

After this has been accomplished and the nano-scale grooves 18 have all been entirely covered thereby coating their walls with the appropriate thickness of stationary phase 22, any excess of the stationary phase solution 20 remaining in the nano-scale grooves 18 is spun off in a centrifuge at 50g of force. The stationary phase solution 20 is evaporated and the stationary phase 22 is stabilised at an elevated temperature at the end of this step of the fabrication process. The thickness of the stationary phase 22 film remaining on the interior walls of the nano-scale grooves 18 as a result of this process may be approximately 5µ.

In the forth step of the fabrication process the nano-scale grooves 18 are covered up by placing the cover piece 26 on the upper surface of the substrate 12 (as detailed in FIGS. 9 and 10). It has been shown that a 5µ thin film of stationary phase atop of the grooves gave adequate sealing between the substrate 12 and the cover piece 26 but it is preferable to use a equivalent layer of a high temperature binder 24. This high temperature binder 24 is applied to the upper surface of the substrate 12 between the nano-scale grooves 18 prior to the application of the cover piece 26. Additionally, a small pressure difference of 100 kPa (15 psi) provided a completely gas tight seal in the same area.

In the finishing step of the fabrication process gas connectors, thermoelectric coolers, and resistor heaters are added to one or both faces of the closed columns. Also, a resistor heater can be added to the body of the device via a screen printing technique or, in the alternative, simply glued on. To save weight and to speed up heat transfer, the substrate 12 can sometimes act as the template for the thermoelectric cooler. Additionally, reversing the pulsed DC current supplied to the cooler changes it to a heat pump which has the effect of adding heating power to the assembly of the device.

Finally, a miniature thermocouple is also provided and may be prefabricated in the substrate 12 and connected to the temperature controller. The electrical leads supplying the power to this unit can have a variety of designs such as a pig-tail or metal clips. One design used in the example was two Cu alloy springs that can be snapped into the oven-slop. In order to fit into existing chromatographic instruments, 1.6 mm (1/16 inch) stainless inlet and outlet tubing was added onto the nano-column. Glass wool insulation is furnished to the sides without thermoelectric cooling.

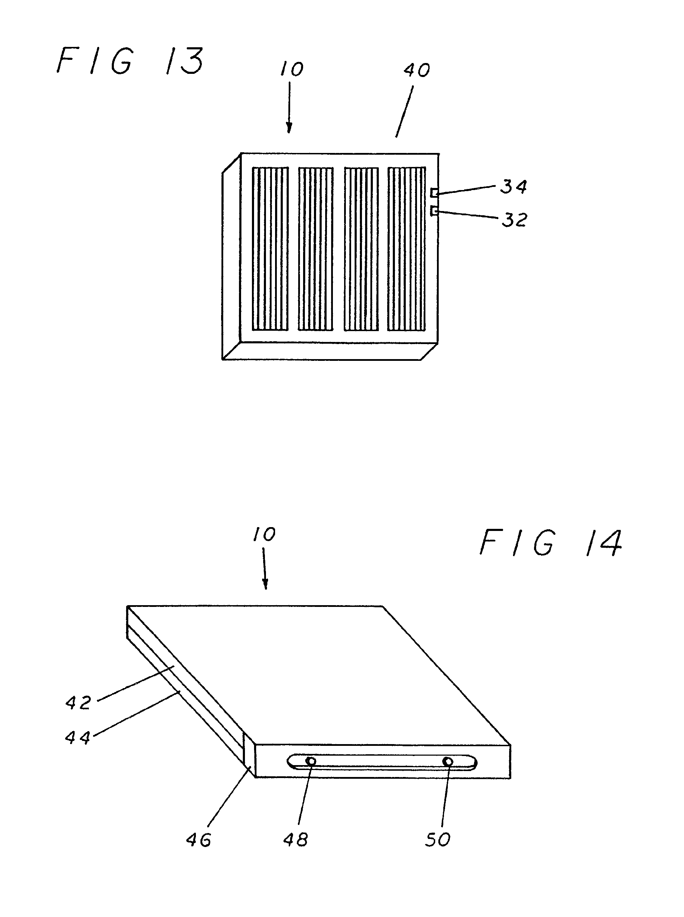

The manner in which the nano-channels 30 are configured into different patterns to meet the needs of specific users is detailed in FIGS. 11, 12, and 13, which detail the method of construction of various embodiments of the present invention. The first of these alternative embodiments as illustrated in FIG. 11 is a single large channel column 28 having an interior capillary diameter of 15 to 150µ. This design of the system provides a relatively large column capacity and works very well in the analysis of samples that have relatively low levels of analyte concentrations. At either end of the nano-channel 30 in this and other designs are the sample inlet 32 and the sample outlet 34. These components allow for the introduction of the sample compound into the nano-channel 30 for its separation and for the transfer of its constituent components for their analysis in an appropriate device.

An additional alternative embodiment of the present invention is the small parallel channel column 36 illustrated in FIG. 12 which details this embodiment of the invention as being constructed by using of a large number of small parallel channel columns 36 having an inside capillary diameter of approximately 10µ. The use of these small parallel channel columns 36 is more desirable than the previous embodiment for faster and more efficient separation of the sample compound. This embodiment of the present invention works well for the analysis of compounds that have a relatively high concentration of the analyte compounds. The small parallel channel column 36 uses a merging channel 38 located at either end of the nano-channels 30 which serves to disperse, collect, and divert the flow of the analytes to and from the sample inlet and outlet, 32 and 34.

Finally, a still further embodiment of the present invention is the combination channel column 40 illustrated in FIG. 12 and which details this embodiment of the present invention's use of a combination of parallel and serial nano-channels 30 which balance the efficiency and capacity benefits of the previous two embodiments. This embodiment works well for the analysis of samples that contain a broad range of analyte concentrations and is thus, the most versatile of the three illustrated embodiments of the invention.

### EXAMPLE 1

As the first example, a single large channel column 28 as illustrated in FIG. 11 for gas chromatography is fabricated on a 6x6x0.5 cm fused silica template. The cross-section of the contained nano-channel 30 is rectangular in shape and measures 50µ in width and 100µ in depth. The total length of the column is 5 meters. The substrate 12 is cut out from a 3mm thick silica sheet and polished on all edges to ensure gas-tight sealing when the connectors are added. After polishing the substrates 12, they are washed and rinsed in sequence in the following media under ultrasonic stirring: 35% HCl, TCE, methanol, and deionized water. With this process complete, the dried template is then roller coated with 3µ of the positive working photoresist 14 of diazonaphthaquinone (DQ) in a novolac resin-methanol emulsion and then the coated substrate 12 is pre-baked and baked at 50°C for four hours and then baked at 150°C for an additional 2 hours to set the emulsion. While imparting the desired pattern top the photoresist 14, the exposure lasts 1/20 second under a GCA 4800 stepper using the Hg g-line. Once the exposure is complete, the development is carried out in a 1.0% NaOH aqueous-5% methanol solution which produces the exposed photoresist grooves 16. The exposed surface of the substrate 12 is then etched in 6% of HF for 16 minutes under mild constant sonication (100db). After the etching process has been completed, the photoresist 14 is lifted off by exposing the backside of the template for one full second followed by a washing in a 1% NaOH solution. The substrate is then rinsed in DI and dried at 100°C. The fabrication of the nano-scale grooves 18 are thus completed.

The stationary phase 22 is formed on the surface of the nano-scale groove 18 by the following set of reactions: 1) reacting the substrate with 10% HCl aqueous solution for 24 hours and then reacting the acid-activated siliceous surface with SiCl₄ thereby causing partial chlorosolylation of the surface; 2) reacting the above surfaces with water vapour until essentially all the chlorosilyl groups have been hydrolysed to hydroxysilyl groups; 3) reacting by contacting the hydrolysed surface with excess amount of Si(CH₃)₂CI₂ or dichlorosilane of the general formula RR'SiCI₂ or RSiHCl₂, where R and R' represent methyl, ethyl, vinyl, phynol, biphynol, and other types of substitution groups for which the reaction time is 30 minutes to ensure that more than half of the hydroxysilyl groups have been reacted to form the distributed surface terminals of the general formula 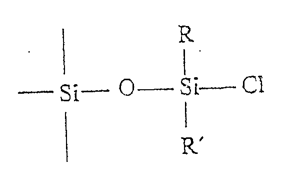 4) reacting the product of 3 with water vapour until essentially all the distributed chlorosilyl groups have been hydrolysed to corresponding disubstituted hydroxysilyl groups; 5) reacting the product of 4 with SiCI₄ for 90 minutes to convert all the available disubstituted hydroxysilyl groups to form silyoxy chlorosilyl groups; and 6) reacting the product of 5 with a molar excessive amount of organosilioxane polymer polynol in the liquid phase which has the structural formula of 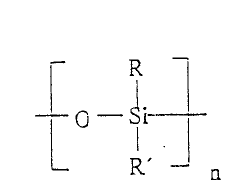 where n is larger than 60. It was required that all the silyloxy chlorosilyl groups react with the polyol to form pendant polyol groups having at least one hydroxyl group per residue. The fully finished substrate 12 from above is then covered with a silica cover piece 26 of the same dimension to form the nano-scale capillary column. The mechanism which enables the device to be connected to ancillary analytical equipment is accomplished ideally by the use of a pair of a 60x4x6mm TEFLON® washers (the inlet and outlet seal washers, 48 and 50) with 1.6 mm (1/16 inch) NPT female threaded holes that are pressed against the column ports and the threaded holes are then aligned with the sample inlet and outlet, 32 and 34.

The entire assembly is then covered with the 0.5 mm aluminium upper and lower cover plates, 42 and 44, on its upper and lower surfaces and by a front cap 46 which is fully detailed in FIG. 14. The front cap 46 is equipped with a recessed area containing two 3.2 mm (1/8 inch) perforations which are aligned to the thread holes in the inlet and outlet seal washers, 48 and 50. The entire assembly then undergoes a stamping process to hold its component securely together. The aluminium upper and lower cover plates, 42 and 44, and the front cap 46 gave good heat conducting properties and fair temperature response. The methyl-silica single large channel column 28 was tested to have equivalent plate number of 2,000,700 and had the equivalent separation efficiency of 14,000 for isooctane as measured by the ratio of retention time to half peak width which is over 100 times better compared with a 25 m 200µ HP-1 column under the same set of test conditions. Additionally, the complete single large channel column 28 measures 64x60x7 mm and weighs 58.3 g which can be installed into any existing CG systems, particularly small and portable models on the market today.

### EXAMPLE 2

As the second example, a small parallel channel column 36 as illustrated in FIG. 12 for gas chromatography is fabricated on a 25x25x2 mm fused silica substrate 12. The cross-section of the contained nano-channels is 200 nm wide, 1000 nm deep, and 1µ apart. All the 2x10₄ nano-scale grooves 18 are in parallel as demonstrated in this FIG. and the small parallel channel column 36 is to be the equivalent of a 25m 400µ mega-bore capillary OV-1 column.

Unlike the fabrication process from example 1, in this process Novolak photoresist 14 is used together with diazonaphthoquinone as a sensitiser with the use of 2-ethoxyethylacetate as the casting solvent. The resulting photoresist 14 layer is then pre-baked at 75°C and baked at 95°C in air for a total of 135 minutes. The exposure of the photoresist 14 is carried out on the same ASML 5000/50 stepper as in the first example and its subsequent development is completed in 0.25 Mol/l KOH for 30 seconds under sonication. This procedure removes the underexposed photoresist and forms within it the desired exposed photoresist groove 16 pattern thus, exposing the same desired pattern in the upper surface of the underlying substrate 12.

The etching process in the substrate 12 is carried out in a 5% HF aqueous solution for 20 minutes. This slower etching time was found to give a better controlled result in the vertical walls of the nano-scale grooves 18. The depth of the nano-scale grooves 18 was found to be 1.14µ with a width of 0.21 microns under the SEM. The merging channel 38 is triangular in shape to handle a gas flow of a minimum of 2-5 ml/s which is a standard amount. The stationary phase 22 is composed of a 50%-50% trifluropropylmethyl silicone which is dissolved in DMF and then bonded to the substrate at 1µ thickness.

The open nano-scale grooves 18 are then covered with an identical cover piece 26 to the substrate 12 without the etched nano-scale grooves 18. The substrate 12 and the cover piece 26 are then soaked in 5% KOH for two hours and the excessive amount of alkaline solution is spun off in a centrifuge. The two pieces are then pressed together and dried in nitrogen at 250°C for 10 hours. This step bound the two pieces together and forms the small parallel channel column 36.

The small parallel channel column 36 was found to be useful for the separation and analysis of many organic substances including freon, TFCE, methane, and ethylene in air. The analysis time associated with the use of the present invention was within a few seconds of the introduction of the sample to the system. Finally, the potential applications of the small parallel channel column 36 include the monitoring of indoor air, monitoring chemical warfare agents, and the remote detection of illicit drugs.

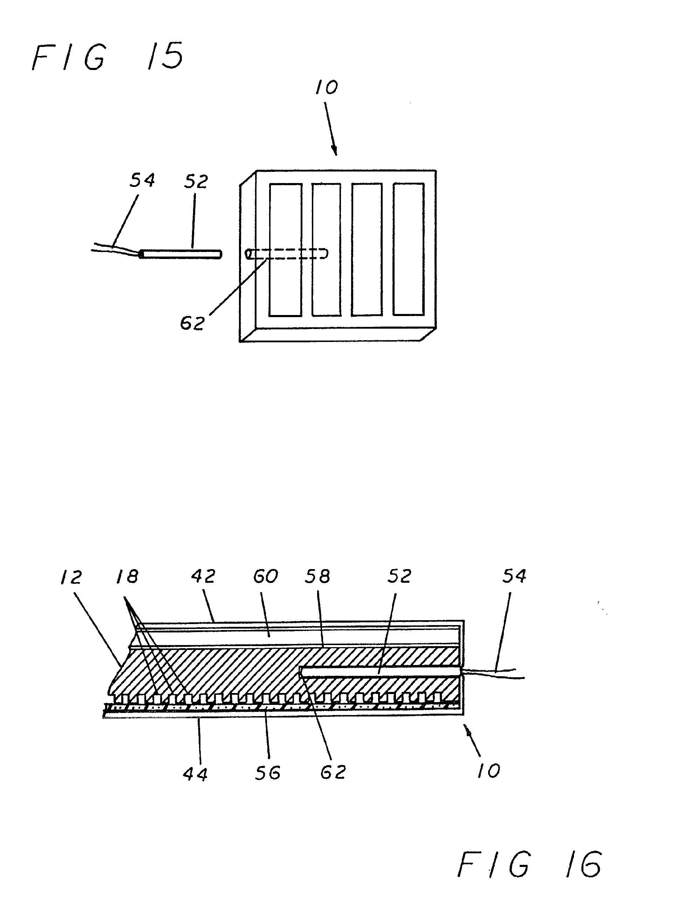

The use of a thermocouple device 52 with the column in order to monitor its operating temperature is further illustrated in FIGS. 15 and 16. The thermocouple 52 is essentially a cylindrical probe that is inserted into thermocouple hole 62 that is drilled into the body of the prepared substrate 12 in a position which will adequately reflect the overall condition of the device. The thermocouple 52 is then connected to monitoring equipment through the thermocouple leads 54 extending out the sides of the nano-fabricated chromatography column 10.

The thermocouple 52 works in conjunction with a p-n TI thermoelectric module 60 which is attached to the upper surface of the prepared substrate 12 within the upper cover plate 42 and which is employed to control the operating temperature of the device. The attachment of the thermoelectric module 60 to the prepared substrate 12 is accomplished with the use of a heat sink film 58 which is important to the operation of the device as it facilitates for the efficient transfer of heat or cold from the thermoelectric module 60 to the prepared substrate 12, and therefore to the substances passing through the nano-scale grooves 18. Finally, the device is also equipped with a thermal insulation layer 56 within the lower cover plate 44 which aids the device in the retention of the temperature that is required to perform the desired separation processes. With this system in place, a lower temperature limit of -15°C was achieved under 6V of constant DC power. Additionally, as with example 1, reversing the DC current showed that the upper operational temperature limit of 183°C was attainable.

Although the principles taught herein have been described in considerable detail with reference to certain preferred versions thereof, other versions are possible. Therefore, the scope of the appended claims should not be limited to the description of the preferred versions contained herein.

The disclosures in United States patent application no. 10/021,167, from which this application claims priority, and in the abstract accompanying this application are incorporated herein by reference.

## Claims

1. A nano-fabricated chromatography column including:
a first silica substrate having at least one etched surface said etched surface forming a groove; and
a second silica substrate fixedly attached to said first silica substrate of said etched surface so as to cover said groove and form a channel between said first and second silica substrate.

2. A nano-fabricated chromatography column as in claim 1, including a film of polydimethylsiloxane bonded to said first and second substrate within said channel.

3. A nano-fabricated chromatography column as in any preceding claim, wherein said etched surface is formed by photolithography or X-ray lithography.

4. A chromatography column including:
a first substrate having at least one etched surface said etched surface forming a groove;
a second substrate fixedly attached to said first substrate of said etched surface so as to cover said groove and form a channel between said first and second substrate; and
a stationary phase solution coating said channel.

5. A chromatography column as in claim 4, wherein said substrate is a silica, a metal, a glass, a ceramics or an organic polymeric compound.

6. A chromatography column as in claim 5, wherein said substrate is formed from polydimethylsiloxane, methyl silicone gum, phenysilioxane biphenysiloxane, trifluoropropylsilioxane, cyanopropysilioxane, polyethylene glycol, ethylene glycol succinate, zeolite, molecular sieve or their derivatives.

7. A chromatography column as in any one of claims 4 to 6, wherein said etched surface is formed by one of the following: photolithography, X-ray lithography or e-beam writing.

8. A column as in any preceding claim, including a thermoelectric heater and cooler attached to at least one of said silica substrates.

9. A column as in any preceding claim, including a heat sink compound between said thermoelectric heater and cooler and said silica substrate.

10. A column as in any preceding claim, including a thermocouple in contact with at least one of said silica substrates.
